# EUROPÄISCHE PATENTSCHRIFT

(11) **EP 3 657 123 B1**
(45) Veröffentlichungstag und Bekanntmachung des Hinweises auf die Patenterteilung: **29.06.2022**
(21) Anmeldenummer: 18207947.5
(22) Anmeldetag: 23.11.2018
(51) Int. Cl.: G01B 11/02, B65G 1/02, G06Q 10/08, G06Q 50/28

(54) **DURCHLAUFREGALEINHEIT UND STEUERSYSTEM FÜR EINE DURCHLAUFREGALEINHEIT**
GRAVITY FEED RACK UNIT AND CONTROL SYSTEM FOR A GRAVITY FEED RACK
ETAGÈRE INCLINÉE ET SYSTÈME DE CONTROLE POUR UNE ETAGÈRE INCLINÉE

(43) Veröffentlichungstag der Anmeldung: 27.05.2020
(73) Patentinhaber: SICK AG, 79183 Waldkirch (DE)
(72) Erfinder: BÜRGER, Jürgen, 79331 Teningen (DE); OPFOLTER, Matthias, 79211 Denzlingen (DE)
(74) Vertreter: Manitz Finsterwald Patent- und Rechtsanwaltspartnerschaft mbB

(56) Entgegenhaltungen:
- BE-B1- 1 023 861
- DE-B3-102016 108 582

## Beschreibung

Die vorliegende Erfindung betrifft eine Durchlaufregaleinheit und ein Steuersystem für eine Durchlaufregaleinheit.

Durchlaufregaleinheiten dienen unter anderem der Bereitstellung von Lagermaterial in Fertigungs-, Montage- oder Logistikprozessen. Sie weisen in der Regel mehrere übereinander und/oder nebeneinander angeordnete Regalfächer auf. Die Regalfächer werden auf einer Beladungsseite mit dem Lagermaterial befüllt und das Lagermaterial wird auf einer der Beladungsseite in Längsrichtung gegenüberliegenden Entnahmeseite aus den Regalfächern entnommen. Das Lagermaterial kann als vordefinierte Lagermaterialeinheiten, beispielsweise in standardisierten Behältern, in den Regalfächern angeordnet werden.

Derartige Durchlaufregaleinheiten werden unter anderem für eine Lagerhaltung nach dem sogenannten KANBAN-Prinzip verwendet. Dabei wird eine vordefinierte Mindestanzahl an Lagermaterial in Durchlaufregaleinheiten direkt am Verbrauchsort vorgehalten. Ein Unterschreiten der Mindestanzahl wird erfasst und ein entsprechender Nachfüllvorgang ausgelöst. Dabei ist jeder Art von Lagermaterial eine eindeutige Kennung zur Identifizierung zugeordnet, welche üblicherweise direkt an den Lagermaterialeinheiten angebracht ist.

Zur Erfassung des in einer Durchlaufregaleinheit vorhandenen Lagermaterials können automatisierte Sensorsysteme eingesetzt werden. Die Sensorsysteme sind in der Regel an ein Steuersystem angeschlossen, über welches die erforderlichen Nachfüllvorgänge automatisiert ausgelöst und gesteuert werden. Beim Nachfüllen werden in der Regel unterschiedliche Arten von nachzufüllendem Lagermaterial in einem der Durchlaufregaleinheit zugeordneten Los zusammengefasst und angeliefert. An der Durchlaufregaleinheit wird das Lagermaterial dann den einzelnen Regalfächern zugeordnet.

Aus der Druckschrift DE 10 2016 108 582 B3 ist eine Durchlaufregaleinheit mit einem Sensorsystem zur Bestandsüberwachung der einzelnen Regalfächern einer Durchlaufregaleinheit bekannt. Dabei ist den einzelnen Lagerplätzen der Regalfächer jeweils ein Sensor zugeordnet und die Sensoren eines Regalfachs sind über Einzelleitungen mit einer dem betreffenden Regalfach zugeordneten Fach-Kontrolleinheit verbunden.

Je nach zugrundeliegendem Prozess kann es erforderlich sein, die Durchlaufregaleinheiten regelmäßig umzubauen, um sie an Veränderungen des Prozesses anzupassen. Der Prozess kann sich beispielsweise dahingehend ändern, dass zusätzliches Lagermaterial bereitzustellen ist oder die zu montierenden Werkstücke geändert werden. Beim Umbau kann unter anderem eine Einteilung der Regalfächer und/oder eine Größe der einzulagernden Lagermaterialeinheiten verändert werden. Dabei muss in der Regel die Sensorik zur Erfassung des Bestands an Lagermaterial aufwendig an die veränderte Regaleinteilung angepasst werden. Druckschrift BE 1 023 861 B1 beschreibt eine Vorrichtung gemäß dem Oberbegriff von Anspruch 1.

Es ist Aufgabe der Erfindung, ein Steuersystem für eine Durchlaufregaleinheit derart bereitzustellen, dass der Bestand an eingelagertem Lagermaterial auf einfache und kostengünstige Weise erfasst werden kann.

Diese Aufgabe wird durch ein Steuersystem für eine Durchlaufregaleinheit gemäß Anspruch 1 gelöst. Weiterbildungen sind in abhängigen Ansprüchen angegeben. Zudem umfasst die Erfindung eine Verwendung nach Anspruch 9.

Im Rahmen der Erfindung wurde erkannt, dass es zur Erfassung des in den einzelnen Regalfächern eingelagerten Bestands an Lagermaterialeinheiten ausreicht, einen einzelnen Distanzsensor je Regalfach vorzusehen, welcher von der Einlagerungsseite aus den Abstand bis zu der hintersten Lagermaterialeinheit misst. Damit muss nicht mehr ein Sensor für jede eingelegte Lagermaterialeinheit, sondern es muss nur noch ein Sensor je Regalfach vorhanden sein und die Anzahl der benötigten Sensoren ist besonders klein. Auch kann das Steuersystem bei einem Umbau der Durchlaufregaleinheit an eine geänderte Konfiguration der Regalfächer angepasst werden, indem rein softwareseitig ein in der Steuereinheit hinterlegtes Steuerprogramm zur Berechnung der Anzahl eingelagerter Lagermaterialeinheiten angepasst wird. Ein Umbau oder eine Neuanordnung der Belegungssensoren ist dann in der Regel nicht notwendig.

Ein mit einer erfindungsgemäßen Durchlaufregaleinheit ausgestattetes Regal kann selbstverständlich zusätzlich auch noch Regaleinheiten, etwa Durchlaufregaleinheiten, oder Regalfächer umfassen, die herkömmlich ausgestaltet sind. Derartige herkömmlich ausgestalteten Regaleinheiten oder Regalfächer können beispielsweise ohne Anbindung an das Steuersystem oder ohne die Belegungssensoren ausgebildet sein. Als erfindungsgemäße Durchlaufregaleinheit wird dann nur derjenige Teil des Regals betrachtet, der die erfindungsgemäßen Merkmale aufweist. Insofern umfasst die Erfindung auch ein Regalsystem mit einer erfindungsgemäßen Durchlaufregaleinheit.

Die Belegungssensoren können oberhalb, unterhalb oder seitlich der Regalfächer bzw. der Regalebenen der Regalfächer angeordnet sein. Die Belegungssensoren können dazu ausgebildet sein, die Abstände optisch, etwa nach dem Lichtlaufprinzip (time-of-flight- bzw. ToF-Prinzip), zu ermitteln. Die Belegungssensoren können dazu ausgebildet sein, ein optisches Messsignal in den Messbereich zu emittieren und einen von der hintersten Lagermaterialeinheit reflektierten Anteil des Messsignals zur Bestimmung des Abstands zu empfangen. Beispielsweise können die Belegungssensoren den Abstand aus einer Laufzeit des als gepulstes Signal ausgesendeten Messsignals oder aus einer Phasenverschiebung zwischen ausgesendetem und empfangenem Messsignal bestimmen. Die Messbereiche der Belegungssensoren können punktförmig oder kegelförmig mit kreisförmiger oder ovaler Grundfläche ausgebildet sein. Die Messbereiche der Belegungssensoren können aber auch linienförmig ausgebildet sein.

Zum Erfassen des Einlegens der einzulegenden Lagermaterialeinheit können die Sensoranordnungen des Steuersystems jeweils einen zusätzlichen Beladungssensor umfassen. Die Beladungssensoren können jeweils als separate Sensoren ausgebildet und an die Datenleitung angeschlossen sein. Die Beladungssensoren und die Belegungssensoren können seriell an die Datenleitung angeschlossen sein. Insbesondere können der Beladungssensor und der Belegungssensor, die einem gemeinsamen Regalfach zugeordnet sind, jeweils seriell an die Datenleitung angeschlossen sein.

Die Beladungssensoren können als Näherungssensoren oder als Lichttaster, vorzugsweise als Reflexions-Lichttaster, ausgebildet sein. Messbereiche der Beladungssensoren können jeweils im Wesentlichen senkrecht zur Fachebene des betreffenden Regalfachs ausgerichtet sein. Die Beladungssensoren können jeweils unterhalb, oberhalb oder seitlich der Fachebene des zugeordneten Regalfachs angeordnet sein.

Die Sensoranordnung eines der Regalfächer oder die Sensoranordnungen mehrerer oder aller Regalfächer können auch dazu ausgebildet sein, das Einlegen der einzulegenden Lagermaterialeinheit mittels der Belegungssensoren zu erfassen. Dabei können die Messbereiche der betreffenden Belegungssensoren derart ausgerichtet sein, dass sie auch an der Einlagerungsseite angeordnete Einlegebereiche der Regalfächer erfassen. Das Einlegen der Lagermaterialeinheit wird dann dadurch erfasst, dass die Lagermaterialeinheit durch den zugeordneten Belegungssensor innerhalb des Einlegebereichs detektiert wird. Der Belegungssensor ist dann dazu ausgebildet, das Einlegen der Lagermaterialeinheit anzeigende Beladungssensordaten zu erzeugen und an die Steuereinheit zu übermitteln.

Die Durchlaufregaleinheit kann auch sowohl Regalfächer, deren Sensoranordnungen den Belegungssensor und den Beladungssensor umfassen, als auch Regalfächer aufweisen, deren Sensoranordnungen lediglich den Belegungssensor umfassen und bei denen das Einlegen der Lagermaterialeinheit durch den Belegungssensor erfasst wird. Im Folgenden werden vornehmlich Ausführungsformen des Steuersystems beschrieben, bei der die Sensoranordnung den zusätzlichen Beladungssensor umfasst. Die nachfolgenden Ausführungen gelten jedoch analog auch für Ausführungsformen, bei denen das Einlegen der Lagermaterialeinheit mittels des Belegungssensors erfasst wird.

Die Steuereinheit, beispielsweise das in der Steuereinheit hinterlegte Steuerprogramm, kann die Anzahl eingelagerter Lagermaterialeinheiten dadurch berechnen, dass aus dem Abstand und einer in der Steuereinheit hinterlegten Gesamtlänge des betreffenden Regalfachs eine Belegungslänge des Regalfachs, über die das Regalfach mit Lagermaterialeinheiten belegt ist, berechnet wird und die Belegungslänge durch eine in der Steuereinheit hinterlegte Länge der Lagermaterialeinheiten geteilt wird. Die Gesamtlänge des betreffenden Regalfachs kann beispielsweise eine Länge zwischen dem Belegungssensor und einer an der Entnahmeseite angeordneten Vorderkante, beispielsweise einem an der Annahmeseite angeordneten Anschlag, sein. Die einzelnen Regalfächer der Durchlaufregaleinheit können alle die gleiche Länge, etwa die gleiche Gesamtlänge, aufweisen. Die einzelnen Regalfächer können jedoch auch unterschiedliche Längen, etwa unterschiedliche Gesamtlängen, aufweisen und in der Steuereinheit kann für jedes Regalfach die betreffende Länge, beispielsweise die betreffende Gesamtlänge, hinterlegt sein.

Die Datenleitung kann als eine Netzwerkverbindung, beispielsweise als ein Feldbus, ausgebildet sein. Die Sensoren der Sensoranordnung, insbesondere die Belegungssensoren, können parallel und/oder seriell an die Datenleitung angebunden sein. Indem die Sensoren an eine gemeinsame Datenleitung angebunden sind, können die Sensoren und die Steuereinheit des Steuersystems auf besonders einfache Art und Weise miteinander verkabelt werden.

Die Belegungssensoren und die gegebenenfalls vorhandenen Beladungssensoren bilden an die Datenleitung angeschlossene Kommunikationsteilnehmer. Das Steuersystem kann ein Mastermodul umfassen, welches den an die Datenleitung angeschlossenen Kommunikationsteilnehmern, automatisch eine Kommunikationsadresse zuweist. Die Adresse kann den Kommunikationsteilnehmern beispielsweise auf Grundlage einer Position, an der sie an die Datenleitung angeschlossen sind, zugewiesen werden. Sind die Kommunikationsteilnehmer seriell an die Datenleitung angeschlossen, so können den Kommunikationsteilnehmern die Adressen in der Reihenfolge, in der sie an die Datenleitung angeschlossen sind, zugewiesen werden. Das Zuweisen der Adressen kann beispielsweise automatisiert während eines Initialisierungsvorgangs des Steuersystems bzw. eines die Datenleitung und die Kommunikationsteilnehmer umfassenden Kommunikationssystems erfolgen.

Das Steuersystem kann dazu ausgebildet sein, ein Beladen der Durchlaufregaleinheit mit den Lagermaterialeinheiten anhand der Beladungssensordaten zu steuern und beispielsweise eine Werkerführung zu implementieren. Bei der Werkerführung kann Betriebspersonal, welches die Regalfächer mit den Lagermaterialeinheiten an der Einlagerungsseite befüllt, über Anzeigeeinheiten mitgeteilt werden, in welches Regalfach die einzulegende Lagermaterialeinheit einzulegen ist. Die Beladungssensordaten können dann dazu verwendet werden, das Einlegen der Lagermaterialeinheit in das richtige Regalfach zu verifizieren.

Beispielsweise kann dem Steuersystem, etwa anhand einer an der Lagermaterialeinheit angebrachten und in das Steuersystem eingelesenen Kennung, bekannt sein, in welches Regalfach die einzulegende Lagermaterialeinheit einzulegen ist. Anhand der Beladungssensordaten kann dann erkannt werden, ob die einzulegende Lagermaterialeinheit tatsächlich in das vorgesehene Regalfach eingelegt wird bzw. wurde. Das Steuersystem kann weiter dazu ausgebildet sein, ein fehlerhaftes Einlegen von Lagermaterialeinheiten anzuzeigen, beispielsweise mittels einer optischen und/oder akustischen Rückmeldung. Das Erfassen des Einlegens der Lagermaterialeinheit und die Anordnung des Beladungssensors an der Einlagerungsseite der Regalfächer ermöglicht es, bereits während des Einlegens der Lagermaterialeinheit oder unmittelbar nach dem Einlegen der Lagermaterialeinheit zu erkennen, in welches Regalfach die einzulegende Lagermaterialeinheit eingelegt wird. Dadurch kann ein fehlerhaftes Einlegen angezeigt werden, solange sich die Lagermaterialeinheit noch an der Einlagerungsseite befindet und sie noch auf einfache Weise aus dem falschen Regalfach entnommen werden kann.

Das Steuersystem kann ferner dazu ausgebildet sein, im Rahmen einer automatisierten Befüllung der Durchlaufregaleinheit sicherzustellen, dass an der Durchlaufregaleinheit benötigte Lagermaterialeinheiten bei Bedarf bereitgestellt werden. Hierzu kann die Steuereinheit in einer Leitebene des Steuersystems an eine Lagerführung angebunden sein. Beispielsweise können Lagermaterialeinheiten für eines oder mehrere der Regalfächer bereitgestellt werden, wenn die Anzahl der in den betreffenden Regalfächern eingelagerten Lagermaterialeinheiten unter einen vorgegebenen, in der Steuereinheit hinterlegten Grenzwert fällt. Dabei kann ein gemeinsamer Grenzwert für alle oder mehrere der Regalfächer vorgegeben sein, es kann aber auch für jedes Regalfach ein eigener Grenzwert vorgegeben sein.

Das Durchlaufregal kann dazu ausgebildet sein, die Lagermaterialeinheiten nach dem Einlegen automatisiert von der Einlagerungsseite zu der Entnahmeseite zu verbringen. Beispielsweise können die Regalfächer des Durchlaufregals in Längsrichtung von der Einlagerungsseite zu der Entnahmeseite hin geneigt angeordnet sein und die Lagermaterialeinheiten können sich in den Regalfächern auf drehbaren Transportmitteln, etwa auf Rollen oder Walzen, gelagert zur Entnahmeseite bewegen. Die Regalfächer können auch angetriebene Transportmittel, etwa angetriebene Rollen, Walzen oder Förderbänder, umfassen, um die Lagermaterialeinheiten angetrieben von der Einlagerungsseite zu der Entnahmeseite zu bewegen. Das Durchlaufregal ist derart ausgebildet, dass sich die Lagermaterialeinheiten nach dem Einlegen an der Entnahmeseite der Regalfächer der Reihe nach aufstauen.

Bei einer Weiterbildung der Durchlaufregaleinheit sind die Sensoranordnungen über die Datenleitung seriell verbunden. Vorzugsweise sind alle Sensoren der Sensoranordnungen seriell an die Datenleitung angeschlossen. Insbesondere können die Belegungssensoren und die gegebenenfalls vorhandenen Beladungssensoren seriell an die Datenleitung angeschlossen sein. Dadurch können die Sensoren besonders einfach an die Steuereinheit angebunden werden. Auch ist eine einfache Adressierung der Sensoren über ihre Position an der Datenleitung möglich.

Bei einer Weiterbildung der Durchlaufregaleinheit sind die Belegungssensoren dazu ausgebildet, die Abstände mittels des Lichtlaufprinzips zu messen. Dies ermöglicht eine einfache, aber dennoch präzise Bestimmung der Abstände.

Bei einer Weiterbildung der Durchlaufregaleinheit ist den Regalfächern jeweils eine Anzeigeeinheit zugeordnet und die Steuereinheit ist dazu ausgebildet, Steuerdaten für die Anzeigeeinheiten über die Datenleitung zu übertragen, um eines der Regalfächer als ein Zielregalfach für die einzulegende Lagermaterialeinheit zu kennzeichnen. Dies ermöglicht eine besonders einfache Werkerführung.

Es kann für jedes Regalfach jeweils eine zugeordnete Anzeigeeinheit vorgesehen sein. Die Anzeigeeinheiten können jeweils an der Einlagerungsseite des Regalfachs angeordnet sein, beispielsweise über oder unter der Fachebene der Regalfächer. Die Anzeigeeinheiten können aber auch in einer der Durchlaufregaleinheit zugeordneten Zentralanzeige zusammengefasst sein. Die Zentralanzeige kann beispielsweise als ein Display oder dergleichen ausgebildet sein.

Die Anzeigeeinheiten können jeweils ein oder mehrere Lampen vorzugsweise ein oder mehrere farbige Lampen, umfassen. Beispielsweise können die Anzeigeeinheiten dazu ausgebildet sein, ein erstes Lichtsignal, etwa ein grünes Lichtsignal, zu emittieren um das zugeordnete Regalfach als das Zielregalfach kennzeichnen. Die Anzeigeeinheiten können darüber hinaus dazu ausgebildet sein, das Einlegen der einzulegenden Lagermaterialeinheit in ein falsches, von dem Zielregalfach verschiedenes Regalfach durch ein zweites Lichtsignal, etwa ein rotes Lichtsignal, anzuzeigen. Die Steuerdaten können beispielsweise das anzuzeigende Lichtsignal repräsentieren.

Bei einer Weiterbildung der Durchlaufregaleinheit weist das Steuersystem eine Identifizierungseinheit auf, die dazu ausgebildet ist, eine Kennung der einzulegenden Lagermaterialeinheit zu erfassen und an die Steuereinheit zu übertragen, wobei die Steuereinheit dazu ausgebildet ist, ein Zielregalfach für die einzulegende Lagermaterialeinheit anhand der Kennung zu ermitteln. Dadurch kann das Zielregalfach auf einfache Art und Weise ermittelt werden.

Die Identifizierungseinheit kann beispielsweise als ein Barcode-Leser, ein RFID-Scanner oder als eine Kamera ausgebildet sein und mit der Steuereinheit über eine Kommunikationsleitung verbunden sein. Die Kommunikationsleitung kann getrennt von der zur Anbindung der Belegungssensoren und der gegebenenfalls vorhandenen Beladungssensoren verwendeten Datenleitung ausgeführt sein. Die Kommunikationsleitung kann aber auch über die genannte Datenleitung ausgeführt sein.

In der Steuereinheit können Zuordnungsdaten hinterlegt sein, wobei in den Zuordnungsdaten für jede Kennung der Lagermaterialeinheiten das zugehörige Regalfach hinterlegt ist. Die Zuordnungsdaten können beispielsweise als Tabelle hinterlegt sein.

Bei einer Weiterbildung der Durchlaufregaleinheit umfassen die Sensoranordnungen jeweils den Beladungssensor, der dazu ausgebildet ist, das Einlegen der einzulegenden Lagermaterialeinheit an der Einlagerungsseite des zugeordneten Regalfachs zu erfassen. Die Beladungssensoren und die Belegungssensoren sind, vorzugsweise seriell, an die gemeinsame Datenleitung angeschlossen.

Bei einer Weiterbildung der Durchlaufregaleinheit sind die Belegungssensoren und die Beladungssensoren der einzelnen Regalfächer jeweils vor oder nach den Belegungssensoren und den Beladungssensoren benachbarter Regalfächer an die Datenleitung angeschlossen. Dies ermöglicht es, den Belegungssensor und den Beladungssensor, die einem gemeinsamen Regalfach zugeordnet sind, über kurze Abschnitte der Datenleitung und damit besonders einfach zu verbinden.

Umfasst das Steuersystem zusätzlich für jedes Regalfach jeweils eine zugeordnete Anzeigeeinheit, so können auch die Belegungssensoren, die Beladungssensoren und die Anzeigeeinheiten der einzelnen Regalfächer jeweils vor oder nach den Belegungssensoren, den Beladungssensoren und den Anzeigeeinheiten benachbarter Regalfächer an die Datenleitung angeschlossen sein. Insbesondere können die einem der Regalfächer zugeordneten Sensoren und gegebenenfalls die dem Regalfach zugeordnete Anzeigeeinheit nebeneinander an die Datenleitung angeschlossen sein.

Bei einer Weiterbildung der Durchlaufregaleinheit sind die Belegungssensoren und die Beladungssensoren der einzelnen Regalfächer jeweils an einem gemeinsamen Halter angeordnet. Dies ermöglicht es, die einem der Regalfächer zugeordneten Sensoren auf einfache Weise zu montieren oder zu justieren. An den Haltern kann der zugehörige Belegungssensoren und der zugehörige Beladungssensor jeweils derart angeordnet sein, dass eine Messachse des Messbereichs des Belegungssensors in einem vordefinierten Winkel, vorzugsweise im Wesentlichen senkrecht, besonders bevorzugt senkrecht zu einer Messachse eines Messbereichs des Beladungssensors ausgerichtet ist. Die Halter können jeweils Justageelemente umfassen, mittels derer die Halter an den Regalfächern positioniert und ausgerichtet werden können. Beispielsweise können die Justageelemente dazu ausgebildet sein, eine Rotation der Halter um eine parallel zu der Fachebene und senkrecht zu einer Längsrichtung der Regalfläche ausgerichteten Schwenkachse bzw. Querachse auszuführen.

Bei einer Weiterbildung der Durchlaufregaleinheit sind die Halter jeweils als Blechbiegeteile ausgebildet. Derartige Blechbiegeteile können besonders einfach und kostengünstig hergestellt werden. Jedes Blechbiegeteil kann jeweils ein Ausrichteelement für den an den betreffenden Blechbiegeteil angeordneten Belegungssensor und den an dem betreffenden Blechbiegeteil angeordneten Beladungssensor bilden. Die Halter können jeweils eine Beladungssensoraufnahme für den Beladungssensor und eine Belegungssensoraufnahme für den Belegungssensor aufweisen, wobei die Beladungssensoraufnahme und die Belegungssensoraufnahme jeweils an dem einteiligen Blechbiegeteil des betreffenden Halters ausgebildet sind.

Bei einer Weiterbildung der Durchlaufregaleinheit sind die Belegungssensoren der einzelnen Regalfächer jeweils unterhalb der Fachebene des jeweiligen Regalfachs angeordnet und die Messbereiche der Belegungssensoren schneiden die Fachebenen der Regalfächer jeweils zwischen der Einlagerungsseite und der Entnahmeseite. Die Abstände zu den jeweils hintersten Lagermaterialeinheiten können dann zwischen den Entnahmeseiten und Längspositionen von Schnittbereichen zwischen den Messbereichen und den Fachebenen bestimmt werden.

Bei einer Weiterbildung der Durchlaufregaleinheit sind die Messbereiche der Belegungssensoren der einzelnen Regalfächer in einer senkrecht zu der Fachebene des jeweiligen Regalfachs orientierten Höhenrichtung linienförmig ausgebildet. Dadurch kann die hinterste Lagermaterialeinheit über einen besonders großen Bereich detektiert werden. Die Belegungssensoren können eine Optikeinheit umfassen, welche dazu ausgebildet ist ein zur Bestimmung der Abstände verwendetes Messsignal linienförmig aufzuweiten. Das Messsignal kann beispielsweise als eine elektromagnetische Strahlung, etwa als Licht- oder Laserstrahlung, ausgesendet werden. Die Optikeinheit kann als eine Zylinderlinse oder als ein Linsen-Array ausgebildet sein. Die Messbereiche der Belegungssensoren können auch dadurch linienförmig ausgebildet sein, dass die Optikeinheiten dazu ausgebildet sein, die Messsignale entlang der Höhenrichtung abzulenken und bei den Messungen der Abstände die Messbereiche in der Höhenrichtung abzutasten.

Bei einer Weiterbildung der Durchlaufregaleinheit sind die Belegungssensoren jeweils dazu ausgebildet, als den jeweils gemessenen Abstand einen entlang der Höhenrichtung gemessenen minimalen Abstandswert zu übertragen. Bei einer Messung nach dem Laufzeitprinzip kann der minimale Abstandswert beispielsweise dadurch ermittelt werden, dass eine Laufzeit bestimmt wird, welche zwischen dem Aussenden des Messsignals und dem erstmaligen Empfang des reflektierten Messsignals vergeht.

Bei einer Weiterbildung der Durchlaufregaleinheit sind in der Steuereinheit eine erste Länge erster Lagermaterialeinheiten und eine zweite Länge zweiter Lagermaterialeinheiten hinterlegt. Die Steuereinheit ist dazu ausgebildet, bei der Bestimmung der Abstände die erste Länge oder die zweite Länge in Abhängigkeit von einem der Steuereinheit zugeführten Identifikationssignal zur Identifikation der einzulegenden Lagermaterialeinheit zu berücksichtigen. Dadurch kann die Steuereinheit die Anzahl in einem der Regalfächer eingelagerter Materialeinheiten auch dann bestimmen, wenn Lagermaterialeinheiten unterschiedlicher Länge eingelagert werden. Selbstverständlich können auch mehr als zwei Längen auf diese Weise hinterlegt bzw. berücksichtigt werden.

In der Steuereinheit können Längeninformationen hinterlegt sein, wobei die Längeninformationen jeweils für jedes mögliche Identifikationssignal die zugehörige Länge der betreffenden Lagermaterialeinheit, insbesondere die erste Länge und die zweite Länge, umfassen. Als Identifikationssignal wird der Steuereinheit vorzugsweise die Kennung der betreffenden Lagermaterialeinheit zugeführt, beispielsweise von der mit der Steuereinheit verbundenen Identifizierungseinheit. Neben der ersten Länge und der zweiten Länge kann in der Steuereinheit auch noch eine Mehrzahl zusätzlicher Längen weiterer Lagermaterialeinheiten hinterlegt sein.

Bei einer Weiterbildung der Durchlaufregaleinheit umfasst das Steuersystem eine Kontrolleinheit und die Kontrolleinheit ist über die Datenleitung mit den Sensoranordnungen verbunden. Die Kontrolleinheit ist mit der Steuereinheit über eine weitere Datenleitung verbunden und umfasst ein Mastermodul zur Steuerung einer Datenübertragung auf der Datenleitung. Die Sensoranordnungen sind als durch das Mastermodul angesteuerte Slaveeinheiten an die Datenleitung angeschlossen. Insbesondere kann die Kontrolleinheit über die Datenleitung mit den Belegungssensoren und den gegebenenfalls vorhandenen Beladungssensoren verbunden sein und die Belegungssensoren und die gegebenenfalls vorhandenen Beladungssensoren können als durch das Mastermodul angesteuerte Slaveeinheiten an die Datenleitung angeschlossen sein.

In der Kontrolleinheit können die Abstandsdaten, die durch die an die Datenleitung angeschlossenen Belegungssensoren ermittelt werden, und die Beladungssensordaten, die durch die an die Datenleitung angeschlossenen Beladungssensoren oder Belegungssensoren ermittelt werden, gesammelt und zur Abfrage durch die Steuereinheit bereitgestellt werden. Die Kontrolleinheit kann dazu ausgebildet sein, die Abstandsdaten und die Beladungssensordaten unabhängig von der Steuereinheit an den Belegungssensoren und gegebenenfalls an den Beladungssensoren abzufragen. Umfasst das Steuersystem Anzeigeeinheiten, so können auch die Anzeigeeinheiten jeweils als durch das Mastermodul angesteuerte Slaveeinheiten an die Datenleitung angeschlossen sein. Die Kontrolleinheit kann dazu ausgebildet sein, die Steuerdaten für die Anzeigeeinheiten gesammelt von der Steuereinheit zu empfangen und anschließend an die einzelnen Anzeigeeinheiten adressiert über die Datenleitung weiterzuleiten.

Eine Kommunikation zwischen der Kontrolleinheit, den gegebenenfalls vorhandenen Beladungssensoren, den Belegungssensoren und gegebenenfalls den Anzeigeeinheiten über die Datenleitung kann nach dem Master-Slave-Prinzip erfolgen und durch das Mastermodul gesteuert werden. Die Kontrolleinheit mit dem Mastermodul kann an einem Anfang der Datenleitung angeordnet sein, so dass die Datenleitung ausgehend von dem Mastermodul zu den Belegungssensoren und gegebenenfalls zu den Beladungssensoren und/oder Anzeigeeinheiten geführt ist.

Die weitere Datenleitung kann ebenfalls als Feldbus ausgebildet sein. Ein auf der weiteren Datenleitung verwendetes Kommunikationsprotokoll kann einem auf der Datenleitung verwendeten Kommunikationsprotokoll entsprechen. Das auf der weiteren Datenleitung verwendete Kommunikationsprotokoll kann sich jedoch auch von dem auf der Datenleitung verwendeten Kommunikationsprotokoll unterscheiden.

Alternative Ausführungsformen der Durchlaufregaleinheit können auch ohne die Kontrolleinheit ausgebildet sein. In diesem Fall kann das Mastermodul beispielsweise in der Steuereinheit angeordnet und die Steuereinheit direkt an die Datenleitung angebunden sein. Die Kontrolleinheit kann alternativ auch in einem der Belegungssensoren oder in einem der Beladungssensoren angeordnet sein, so dass beispielsweise ein erster der Beladungssensoren oder ein erster der Belegungssensoren zusätzlich das Mastermodul umfasst.

Die Erfindung betrifft ferner eine Verwendung gemäß Anspruch 9 von wenigstens zwei Distanzsensoren als Belegungssensoren eines Steuersystem für eine Lagermaterialeinheiten in wenigstens zwei Regalfächern bereitstellende Durchlaufregaleinheit.

Die Erfindung wird nachfolgend anhand von Figuren erläutert. Dabei zeigen in jeweils schematischer Darstellung:
- Fig. 1: eine Durchlaufregaleinheit;
- Fig. 2: ein Steuersystem für die Durchlaufregaleinheit;
- Fig. 3: ein Regalfach der Durchlaufregaleinheit mit einem Belegungssensor und einem Beladungssensor;
- Fig. 4: eine Seitenansicht eines Einlagerungsbereichs des Regalfachs mit einer Haltevorrichtung für den Belegungssensor und den Beladungssensor;
- Fig. 5: eine weitere Ansicht des Einlagerungsbereichs des Regalfachs mit der Haltevorrichtung;
- Fig. 6: einen Querträger und einen Halter der Haltevorrichtung; und
- Fig. 7: den Halter der Haltevorrichtung.

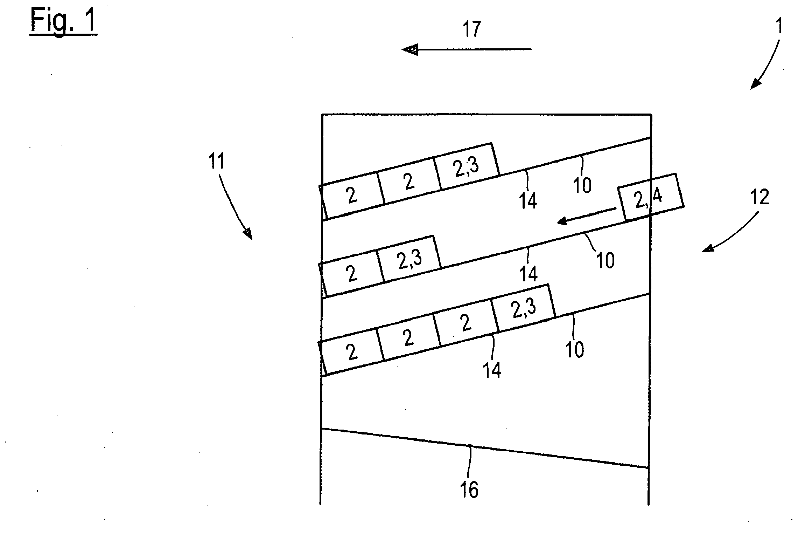

Fig. 1 zeigt eine Durchlaufregaleinheit 1 mit drei (hier übereinander) angeordneten Regalfächern 10. Die Regalfächer 10 sind in einer von einer Einlagerungsseite 12 zu einer Entnahmeseite 11 der Regalfächer 10 verlaufenden Längsrichtung 17 geneigt ausgebildet. In den Regalfächer 10 werden Lagermaterialeinheiten 2 ausgehend von der Entnahmeseite 11 in Richtung der Einlagerungsseite 12 bereitgestellt. Unterhalb der Regalfächer 10 umfasst die Durchlaufregaleinheit 1 ein Rücklauffach 16, welches entgegen der Längsrichtung 17 geneigt ist und zur Rückführung der Lagermaterialeinheiten 2 von der Entnahmeseite 11 zu der Einlagerungsseite 12 dient. Die Durchlaufregaleinheit 1 kann über oder neben den dargestellten Regalfächern 10 weitere Regalfächer umfassen, die ausgebildet sind, wie es für die Regalfächer 10 beschrieben wird.

In jedem Regalfach 10 bildet diejenige Lagermaterialeinheit 2, die der Einlagerungsseite 12 in Längsrichtung 17 nächstgelegen angeordnet ist, eine hinterste Lagermaterialeinheit 3. Ein oberstes Regalfach 10 der Durchlaufregaleinheit 1 enthält in dem dargestellten Belegungszustand zwischen der Entnahmeseite 11 und der hintersten Lagermaterialeinheit 3 insgesamt zwei Lagermaterialeinheiten 2, ein mittleres Regalfach 10 enthält zwischen der Entnahmeseite 11 und der hintersten Lagermaterialeinheit 3 eine Lagermaterialeinheit 2 und ein unterstes Regalfach 10 enthält zwischen der Entnahmeseite 11 und der hintersten Lagermaterialeinheit 3 insgesamt drei Lagermaterialeinheiten 2.

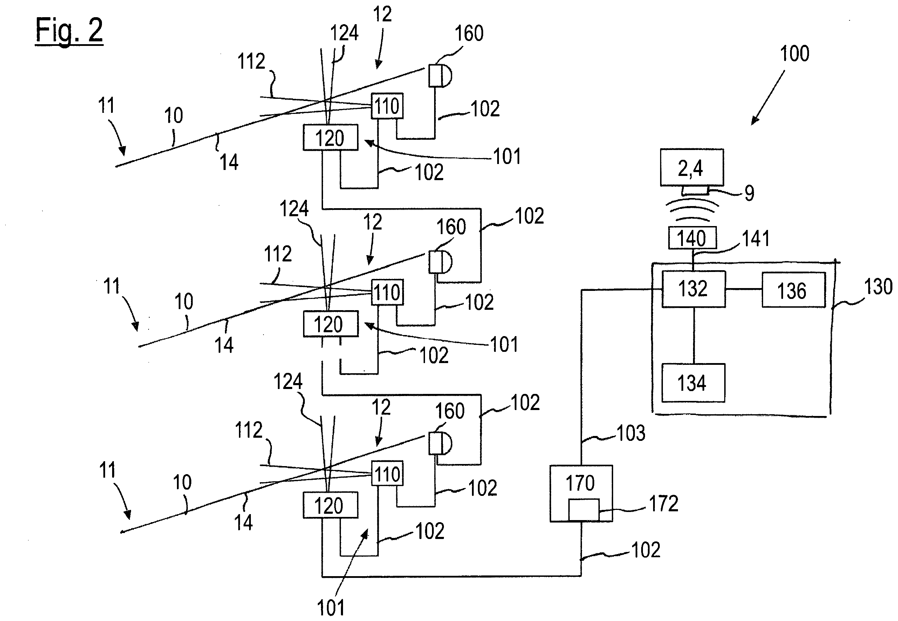

Fig. 2 zeigt ein Steuersystem 100 für die Durchlaufregaleinheit 1. Das Steuersystem 100 umfasst Sensoranordnungen 101 und Anzeigeeinheiten 160, wobei jedem Regalfach 10 jeweils eine der Sensoranordnungen 101 und eine der Anzeigeeinheiten 160 zugeordnet ist. Die Sensoranordnungen 101 umfassen jeweils einen Belegungssensor 110 und einen Beladungssensor 120. Die Belegungssensoren 110, die Beladungssensoren 120 und die Anzeigeeinheiten 160 sind jeweils an der Einlagerungsseite 12 des zugeordneten Regalfachs 10 angeordnet. Die Belegungssensoren 110 weisen einen Messbereich 112 und die Beladungssensoren 120 weisen einen Messbereich 124 auf. Die Belegungssensoren 110 und die Beladungssensoren 120 sind jeweils unter einer Fachebene 14 des zugeordneten Regalfachs 10 angeordnet.

Die Belegungssensoren 110, die Beladungssensoren 120 und die Anzeigeeinheiten 160 sind über eine Datenleitung 102 mit einer Kontrolleinheit 170 und einer Steuereinheit 130 des Steuersystems 100 verbunden. Die Belegungssensoren 110, die Beladungssensoren 120 und die Anzeigeeinheiten 160 sind seriell an die Datenleitung 102 angebunden und die Kontrolleinheit 170 ist an einem Anfang der Datenleitung 102 angeordnet. Die Kontrolleinheit 170 umfasst ein Mastermodul 172, über welches die Kontrolleinheit 170 an die Datenleitung 102 angeschlossen ist.

Die Belegungssensoren 110, die Beladungssensoren 120, die Anzeigeeinheiten 160 und die Kontrolleinheit 170 bilden an die Datenleitung 102 angebundene Kommunikationsteilnehmer. Wie in Fig. 2 dargestellt ist, umfasst die Datenleitung 102 jeweils Leitungssegmente, die sich zwischen benachbarten Kommunikationsteilnehmern erstrecken.

Die Kontrolleinheit 170 ist über eine weitere Datenleitung 103 mit der Steuereinheit 130 verbunden, so dass die an die Datenleitung 102 angebundenen Kommunikationsteilnehmer des Steuersystems 100 über die Datenleitung 102, die Kontrolleinheit 170 und die weitere Datenleitung 103 mit der Steuereinheit 130 verbunden sind. Die Steuereinheit 130 umfasst eine Verarbeitungseinheit 132, die als eine Logikeinheit, beispielsweise ein Mikroprozessor, ein Mikrocontroller, ein ASIC oder ein FPGA, ausgebildet sein kann.

An die Steuereinheit 130, vorzugsweise an die Verarbeitungseinheit 132, ist über eine Kommunikationsleitung 141 eine Identifizierungseinheit 140 angebunden. Die Identifizierungseinheit 140 ist dazu ausgebildet, eine an einer einzulegenden Lagermaterialeinheit 4 angebrachte Kennung 9 zu erfassen und die Kennung 9 an die Steuereinheit 130, insbesondere an die Verarbeitungseinheit 132 zu übermitteln. Die Kennung 9 kann als RFID-Tag, Barcode, Ziffernfolge oder dergleichen ausgebildet sein.

In der Steuereinheit 130 sind Zuordnungsdaten 136 hinterlegt, welche der eingelesenen Kennung 9 ein Zielregalfach für die einzulegende Lagermaterialeinheit 4 zuordnen. In der Steuereinheit 130 sind des Weiteren Längeninformationen 134 hinterlegt, welche der eingelesenen Kennung 9 eine Länge der einzulegenden Lagermaterialeinheit 4 zuordnen. Die Zuordnungsdaten 136 können insbesondere einer ersten Kennung erster Lagermaterialeinheiten ein erstes Zielregalfach und einer von der ersten Kennung verschiedenen zweiten Kennung zweiter Lagermaterialeinheiten ein von dem ersten Zielregalfach verschiedenes zweites Zielregalfach zuordnen. Alternativ oder zusätzlich können die Längeninformationen 134 der ersten Kennung eine erste Länge und der zweiten Kennung eine von der ersten Länge verschiedene zweite Länge zuordnen.

Ein Steuern des Beladens der Durchlaufregaleinheit 1 durch das Steuersystem 100 umfasst ein Erfassen der Kennung 9 durch die Identifizierungseinheit 140 und ein Übertragen der Kennung 9 an die Steuereinheit 130. Ferner umfasst das Steuern ein Ermitteln des Zielregalfachs anhand der übertragenen Kennung 9 und ein Kennzeichnen des Zielregalfachs mittels der dem Zielregalfach zugeordneten Anzeigeeinheit 160. Hierzu werden über die Kontrolleinheit 170 und die Datenleitung 102 Steuerdaten für die zugeordnete Anzeigeeinheit 160 übertragen, um durch die Anzeigeeinheit 160 ein erstes Lichtsignal auszusenden und dadurch das Zielregalfach zu kennzeichnen.

Wird die einzulegende Lagermaterialeinheit 4 in das Zielregalfach eingelegt, wird dies durch den Beladungssensor 120 erfasst. Das Steuern umfasst dann ein Übertragen entsprechender Beladungssensordaten von dem Beladungssensor 120 an die Steuereinheit 130. Anschließend umfasst das Steuern ein Übertragen weiterer Steuerdaten von der Steuereinheit 130 an die Anzeigeeinheit 160 des Zielregalfachs, um das Aussenden des ersten Lichtsignals zu beenden.

Wird die einzulegende Lagermaterialeinheit 4 in ein falsches, nicht dem Zielregalfach entsprechendes Regalfach 10 eingelegt, so wird dies durch den Beladungssensor 120 des falschen Regalfachs 10 erfasst. Das Steuern umfasst dann ein Übertragen von Beladungssensordaten des dem falschen Regalfach 10 zugeordneten Beladungssensors 120 an die Steuereinheit 130 und ein Übertragen von Steuerdaten von der Steuereinheit an die dem falschen Regalfach 10 zugeordnete Anzeigeeinheit 160, um ein Aussenden eines zweiten Lichtsignals durch die dem falschen Regalfach 10 zugeordnete Anzeigeeinheit 160 zu veranlassen.

Wird die einzulegende Lagermaterialeinheit 4 anschließend von dem falschen Regalfach 10 in das Zielregalfach eingelegt, so umfasst das Steuern ein Übertragen entsprechender Beladungssensordaten von dem Beladungssensor 120 des Zielregalfachs an die Steuereinheit 130. Daraufhin umfasst das Steuern ein Übertragen von Steuerdaten an die Anzeigeeinheit 160 des Zielregalfachs, um das Aussenden des ersten Lichtsignals zu beenden, und ein Übertragen von Steuerdaten an die Anzeigeeinheit 160 des falschen Regalfachs 10, um ein Aussenden des zweiten Lichtsignals zu beenden.

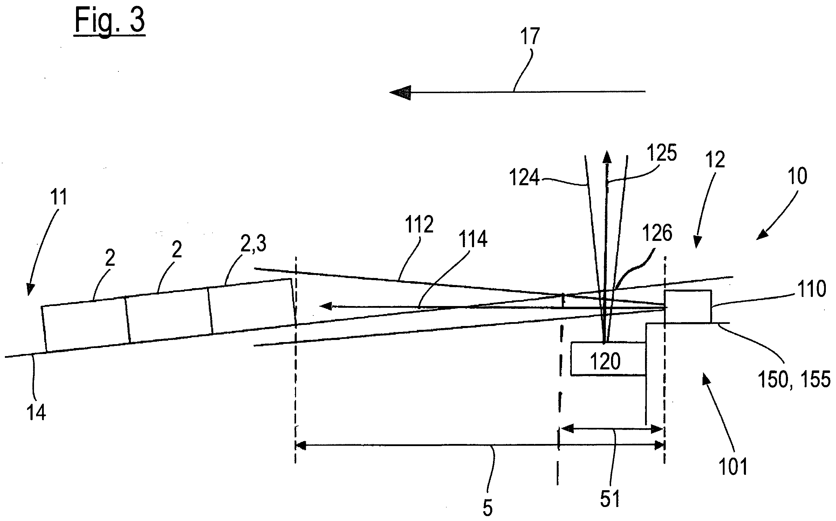

Fig. 3 zeigt eines der Regalfächer 10 der Durchlaufregaleinheit 1 mit dem zugeordneten Belegungssensor 110 und dem zugeordneten Beladungssensor 120 der Sensoranordnung 101. Der Belegungssensor 110 und der Beladungssensor 120 sind unterhalb der Regalebene 14 des Regalfachs 10 an einem gemeinsamen Halter 155 einer Haltevorrichtung 150 angeordnet. Der Messbereich 112 des Belegungssensors 110 schneidet die Fachebene 14 zwischen der Entnahmeseite 11 und der Einlagerungsseite 12. Der Belegungssensor 110 ist dazu ausgebildet, einen Abstand 5 zu der hintersten Lagermaterialeinheit 3 zu erfassen.

Ein Schnittbereich zwischen dem Messbereich 112 des Belegungssensors 110 und der Fachebene 14, in dem der Messbereich 112 ausgehend von dem Belegungssensor 110 in Längsrichtung 17 die Fachebene 14 berührt, definiert einen minimalen Abstand 51, um welchen die hinterste Lagermaterialeinheit 3 mindestens beabstandet von dem Belegungssensor 110 angeordnet sein muss, damit ihr Abstand 5 durch den Belegungssensor 110 erfasst werden kann. Der Messbereich 112 des Belegungssensors 110 ist symmetrisch um eine Messachse 114 des Belegungssensors 110 angeordnet und der Messbereich 124 des Beladungssensors 120 ist symmetrisch um eine Messachse 125 des Beladungssensors 120 angeordnet.

Bei einer alternativen, nicht dargestellten Ausführungsform der Durchlaufregaleinheit 1 kann die Sensoranordnung 101 auch lediglich den Belegungssensor 110 und nicht zusätzlich auch den Beladungssensor 120 umfassen. Dabei kann der Erfassungsbereich 112 des Belegungssensors 110 derart ausgerichtet sein, dass er die Fachebene 14 vor einem Schnittpunkt 126 schneidet, wobei der Schnittpunkt 126 bei der in Fig. 3 dargestellten Ausführungsform durch den der Einlagerungsseite 12 nächstgelegenen Schnittpunkt zwischen der Fachebene 14 und dem Messbereich 124 des Beladungssensor 120 gegeben wird. Der Schnittpunkt 126 definiert ausgehend von der Einlagerungsseite 12 einen Beginn eines Einlegebereichs des Regalfachs 10. Bei der genannten alternativen Ausführungsform ist der Bereich 51 also kürzer als der Abstand von dem Schnittpunkt 126 und dem Belegungssensor 110, so dass der Beladungssensor 120 entbehrlich sein kann. Gegebenenfalls könnte dazu auch der Anstellwinkel des Belegungssensors 110 zur Fachebene 14 größer gewählt werden.

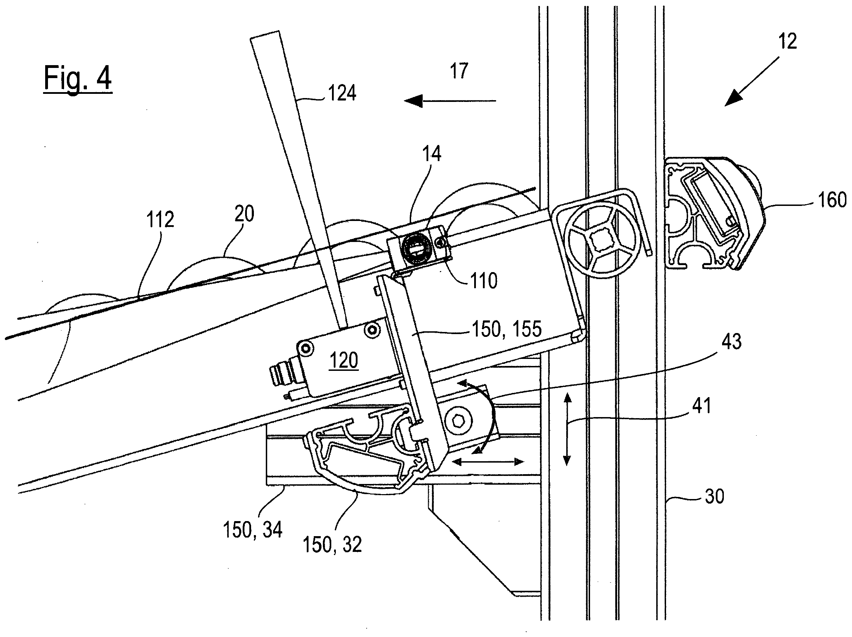

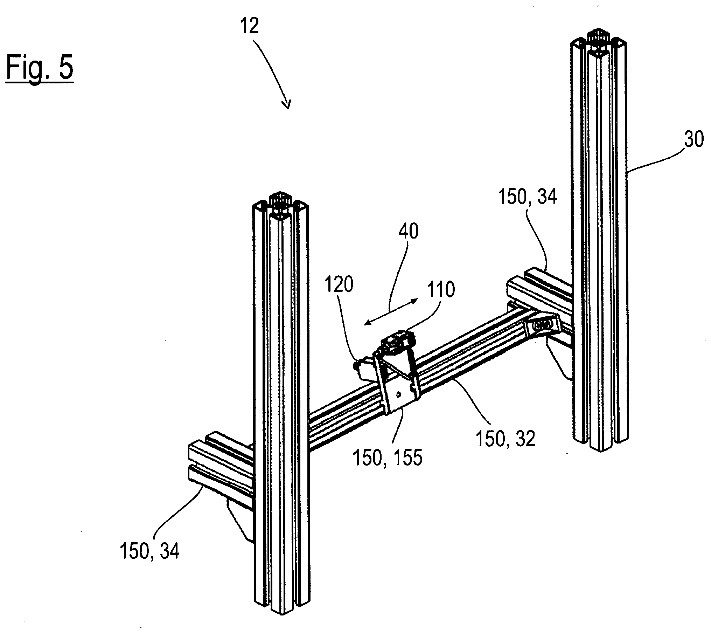

Fig. 4 zeigt eine Seitenansicht und Fig. 5 zeigt eine perspektivische Ansicht des Einlagerungsbereichs 12 des Regalfachs 10 mit der Haltevorrichtung 150 für den Beladungssensor 120 und den Belegungssensor 110.

Die Haltevorrichtung 150 ist an einem Regalgerüst 30 des Durchlaufregals 1 angeordnet und umfasst einen Querträger 32, zwei Längsträger 34 und den Halter 155 für den Belegungssensor 110 und den Beladungssensor 120. Der Querträger 32 und die Längsträger 34 sind jeweils als in einer Trägerlängsrichtung längliche Profile, vorzugsweise als Nutprofile, ausgebildet. Der Halter 155 ist als ein einteiliges Blechbiegeteil ausgebildet.

Die Längsträger 34 sind auf jeweils gegenüberliegenden Seiten des Regalfachs 10 angeordnet. Die Trägerlängsrichtung der Längsträger 34 ist parallel zu der Längsrichtung 17 des Regalfachs 10 ausgerichtet. Die Trägerlängsrichtung des Querträgers 32 ist entlang einer parallel zu der Fachebene 14 und senkrecht zu der Längsrichtung 17 orientierten Querrichtung 40 ausgerichtet. Der Querträger 32 ist an seinen beiden Enden jeweils mit einem der Längsträger 34 in einer Neigungsrichtung 43 drehbar und in Längsrichtung 17 verschiebbar verbunden. Eine Querachse, um die der Querträger 32 drehbar angeordnet ist, verläuft parallel zu der Querrichtung 40. Vorzugsweise ist der Querträger 32 an seinen beiden Enden jeweils mit entlang der Längsrichtung 17 verlaufenden Nuten der Längsträger 34 verbunden.

Die Längsträger 34 sind jeweils mit dem Regalgerüst 30 in einer senkrecht zu der Längsrichtung 17 und senkrecht zu der Querrichtung 40 orientierten Höhenrichtung 41 verschiebbar verbunden. Die Längsträger 34 sind vorzugsweise mit einer in Höhenrichtung 41 verlaufenden Nut des Regalgerüsts 30 verbunden. Der Halter 155 ist mit dem Querträger 32, vorzugsweise mit einer in Querrichtung 40 verlaufenden Nut des Querträgers 32, entlang der Querrichtung 40 verschiebbar verbunden. Damit ist der Halter 155 in der Höhenrichtung 41 und in der Querrichtung 40 verschiebbar, sowie um die Querrichtung 40 drehbar an dem Durchlaufregal 1 angeordnet.

Wie in Fig. 4 dargestellt ist, umfasst das Regalfach 10 Transportmittel 20, um die Lagermaterialeinheiten 2 von der Einlagerungsseite 12 zu der Entnahmeseite 11 zu transportieren. Die Transportmittel 20 sind als entlang des Regalfachs 10 angeordnete Rollen ausgebildet.

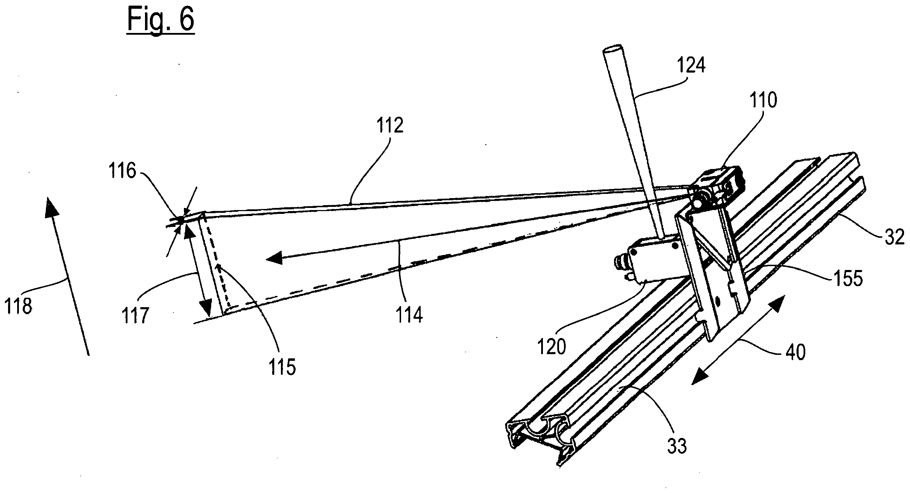

Fig. 6 zeigt den Querträger 32 mit dem Halter 155, dem Belegungssensor 110 und dem Beladungssensor 120. Der Halter 155 ist an einer in der Querrichtung 40 verlaufenden Nut des Querträgers 32, die eine Querführung 33 für den Halter 155 ausbildet, befestigt.

Außerdem ist in Fig. 6 der Messbereich 112 des Belegungssensor 110 dargestellt. Der Messbereich 112 ist in einer senkrecht zu der Fachebene 14 orientierten Höhenrichtung 118 linienförmig ausgebildet. Der Messbereich 112 des Belegungssensors 110 weist senkrecht zu der Messrichtung 114 des Belegungssensors 110 eine Querschnittsfläche 115 auf, deren in Höhenrichtung 118 orientierte Höhe 117 größer ist als deren senkrecht zu der Höhenrichtung 118 orientierte Breite 116. Die Höhe 117 kann zum Beispiel fünfmal, vorzugsweise zehnmal, vorzugsweise einhundertmal größer als die Breite 116 sein.

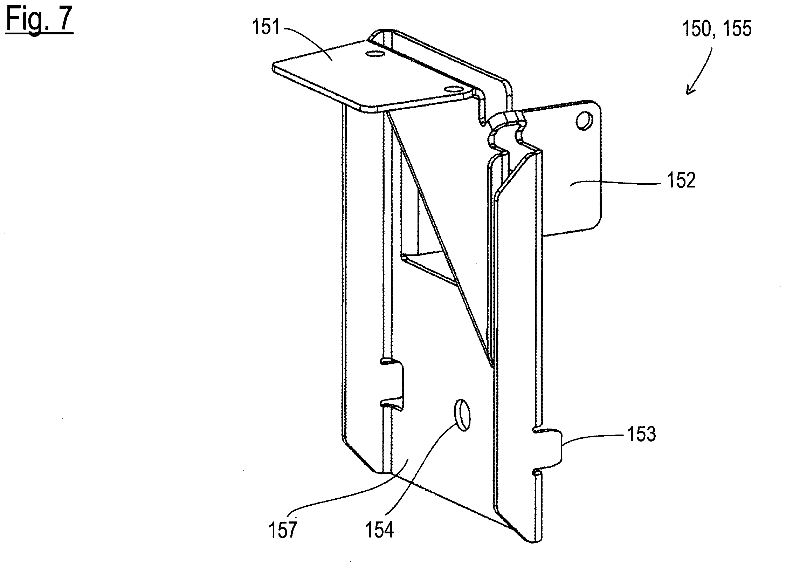

Fig. 7 zeigt den Halter 155 der Haltevorrichtung 150. Der Halter 155 umfasst einen Anlageteil 157, welcher als ein ebener Blechabschnitt ausgebildet ist und an dem in Fig. 7 nicht dargestellten Querträger 32 anliegt. In dem Anlageteil 157 ist ein Befestigungselement 154 zur Befestigung des Halters 155 an dem Querträger 32 ausgebildet. Das Befestigungselement 154 ist in dem Anlageteil 157 als Durchgangsbohrung zur Aufnahme einer Schraube ausgeführt. An dem Anlageteil 157 sind zwei senkrecht zu der Ebene des Anlageteils 157 orientierte Querführungselemente 153 ausgebildet, welche in die Querführung 33 des Querträgers 32 eingreifen.

An dem Anlageteil 157 sind außerdem eine Belegungssensoraufnahme 151 und eine Beladungssensoraufnahme 152 ausgebildet. Die Belegungssensoraufnahme 151 und die Beladungssensoraufnahme 152 sind jeweils als ebene Blechabschnitte ausgebildet. Die Belegungssensoraufnahme 151 ist senkrecht zu der Beladungssensoraufnahme 152 orientiert. Die Belegungssensoraufnahme 151 und die Beladungssensoraufnahme 152 sind jeweils senkrecht zu dem Anlageteil 157 orientiert. Die Belegungssensoraufnahme 151 ist parallel zu der Querrichtung 40 und die Beladungssensoraufnahme 152 senkrecht zu der Querrichtung 40 orientiert.

### Bezugszeichenliste

- 1: Durchlaufregaleinheit
- 2: Lagermaterialeinheit
- 3: hinterste Lagermaterialeinheit
- 4: einzulegende Lagermaterialeinheit
- 5: Abstand
- 9: Kennung
- 10: Regalfach
- 11: Entnahmeseite
- 12: Einlagerungsseite
- 14: Fachebene
- 16: Rücklauffach
- 17: Längsrichtung
- 20: Transportmittel
- 30: Regalgerüst
- 32: Querträger
- 33: Querführung
- 34: Längsträger
- 40: Querrichtung
- 41: Höhenrichtung
- 43: Neigungsrichtung
- 51: minimaler Abstand
- 100: Steuersystem
- 101: Sensoranordnung
- 102: Datenleitung
- 103: weitere Datenleitung
- 110: Belegungssensor
- 112: Messbereich des Belegungssensors
- 114: Messachse des Belegungssensors
- 115: Querschnittsfläche
- 116: Breite
- 117: Höhe
- 118: Höhenrichtung
- 120: Beladungssensor
- 122: Sensorsignal
- 124: Messbereich des Beladungssensors
- 125: Messachse des Beladungssensors
- 126: Schnittpunkt
- 130: Steuereinheit
- 132: Verarbeitungseinheit
- 134: Längeninformationen
- 136: Zuordnungsdaten
- 140: Identifizierungseinheit
- 141: Kommunikationsleitung
- 150: Haltevorrichtung
- 151: Belegungssensoraufnahme
- 152: Beladungssensoraufnahme
- 153: Querführungselement
- 154: Befestigungselement
- 155: Halter
- 157: Anlageteil
- 160: Anzeigeeinheit
- 170: Kontrolleinheit
- 172: Mastermodul

## Patentansprüche

1. Steuersystem (100) für eine Durchlaufregaleinheit (1) zur Bereitstellung von Lagermaterialeinheiten (2) in wenigstens zwei Regalfächern (10),
wobei das Steuersystem (100) wenigstens zwei Sensoranordnungen (101) und eine Steuereinheit (130) umfasst,
wobei die Sensoranordnungen (101) über eine gemeinsame Datenleitung (102) mit der Steuereinheit (130) verbunden sind,
wobei die Sensoranordnungen (101) jeweils einen als Distanzsensor ausgebildeten Belegungssensor (110) umfassen,
wobei die Belegungssensoren (110) dazu ausgebildet sind, jeweils einem der Regalfächer (10) zugeordnet und an einer Einlagerungsseite (12) des zugeordneten Regalfachs (10) derart angeordnet zu werden, dass ein Messbereich (112) des jeweiligen Belegungssensors (110) von der Einlagerungsseite (12) des Regalfachs (10) in Richtung einer der Einlagerungsseite (12) gegenüberliegenden Entnahmeseite (11) des Regalfachs (10) ausgerichtet ist, um einen Abstand (5) zu einer in das zugeordnete Regalfach (10) eingelagerten und dem Belegungssensor (110) nächstgelegenen hintersten Lagermaterialeinheit (3) zu messen,
wobei jeder Belegungssensor (110) dazu ausgebildet ist, über die Datenleitung (102) den gemessenen Abstand (5) repräsentierende Abstandsdaten an die Steuereinheit (130) zu übertragen, um eine Anzahl von in den Regalfächern (10) eingelagerten Lagermaterialeinheiten (2) in der Steuereinheit (130) zu erfassen,
**dadurch gekennzeichnet, dass**
bei jeder Sensoranordnung (101) der Belegungssensor (110) dazu ausgebildet ist, ein Einlegen einer einzulegenden Lagermaterialeinheit (4) an der Einlagerungsseite (12) des zugeordneten Regalfachs (10) zu erfassen und über die Datenleitung (102) das Einlegen anzeigende Beladungssensordaten (122) an die Steuereinheit (130) zu übermitteln, oder
bei jeder Sensoranordnung (101) zusätzlich ein Beladungssensor (120) vorhanden ist
der dazu ausgebildet ist, ein Einlegen einer einzulegenden Lagermaterialeinheit (4) an der Einlagerungsseite (12) des zugeordneten Regalfachs (10) zu erfassen und über die Datenleitung (102) das Einlegen anzeigende Beladungssensordaten (122) an die Steuereinheit (130) zu übermitteln oder bei einem Teil der Sensoranordnungen (101) der Belegungssensor (110) dazu ausgebildet ist, ein Einlegen einer einzulegenden Lagermaterialeinheit (4) an der Einlagerungsseite (12) des zugeordneten Regalfachs (10) zu erfassen und über die Datenleitung (102) das Einlegen anzeigende Beladungssensordaten (122) an die Steuereinheit (130) zu übermitteln, und bei dem anderen Teil der Sensoranordnungen (101) zusätzlich ein Beladungssensor (120) vorhanden ist, der dazu ausgebildet ist, ein Einlegen einer einzulegenden Lagermaterialeinheit (4) an der Einlagerungsseite (12) des zugeordneten Regalfachs (10) zu erfassen und über die Datenleitung (102) das Einlegen anzeigende Beladungssensordaten (122) an die Steuereinheit (130) zu übermitteln.

2. Steuersystem (100) nach Anspruch 1,
wobei die Sensoranordnungen (101) über die Datenleitung (102) seriell verbunden sind.

3. Steuersystem (100) nach einem der vorhergehenden Ansprüche,
wobei die Belegungssensoren (110) dazu ausgebildet sind, die Abstände (5) mittels des Lichtlaufprinzips zu messen.

4. Steuersystem (100) nach einem der vorhergehenden Ansprüche,
wobei das Steuersystem (100) den einzelnen Regalfächern (10) zuordenbare Anzeigeeinheiten (160) umfasst,
wobei die Steuereinheit (130) dazu ausgebildet ist, Steuerdaten für die Anzeigeeinheiten (160) über die Datenleitung (102) zu übertragen, um eines der Regalfächer (10) als ein Zielregalfach für die einzulegende Lagermaterialeinheit (4) zu kennzeichnen.

5. Steuersystem (100) nach einem der vorhergehenden Ansprüche,
wobei das Steuersystem (100) eine Identifizierungseinheit (140) aufweist,
wobei die Identifizierungseinheit (140) dazu ausgebildet ist, eine Kennung (9) der einzulegenden Lagermaterialeinheit (4) zu erfassen und an die Steuereinheit (130) zu übertragen,
wobei die Steuereinheit (130) dazu ausgebildet ist, ein Zielregalfach für die einzulegende Lagermaterialeinheit (4) anhand der Kennung (9) zu ermitteln.

6. Steuersystem (100) nach einem der vorhergehenden Ansprüche,
wobei in der Steuereinheit (130) eine erste Länge erster Lagermaterialeinheiten (2) hinterlegt ist,
wobei in der Steuereinheit (130) eine zweite Länge zweiter Lagermaterialeinheiten (2) hinterlegt ist,
wobei die Steuereinheit (130) dazu ausgebildet ist, bei der Bestimmung der Abstände (5) die erste Länge oder die zweite Länge in Abhängigkeit von einem der Steuereinheit (130) zugeführten Identifikationssignal zur Identifikation der einzulegenden Lagermaterialeinheit (4) zu berücksichtigen.

7. Steuersystem (100) nach einem der vorhergehenden Ansprüche,
wobei das Steuersystem (100) eine Kontrolleinheit (170) umfasst,
wobei die Kontrolleinheit (170) über die Datenleitung (102) mit Sensoranordnungen (102) verbunden ist,
wobei die Kontrolleinheit (170) mit der Steuereinheit (130) über eine weitere Datenleitung (103) verbunden ist,
wobei die Kontrolleinheit (170) ein Mastermodul (172) zur Steuerung einer Datenübertragung auf der Datenleitung (102) umfasst,
wobei die Sensoranordnungen (101) als durch das Mastermodul (172) angesteuerte Slaveeinheiten an die Datenleitung (102) angeschlossen sind.

8. Durchlaufregaleinheit (1) zur Bereitstellung von Lagermaterialeinheiten (2) mit wenigstens zwei Regalfächern (10) und einem Steuersystem (100) gemäß einem der vorhergehenden Ansprüche,
wobei die Regalfächer (10) jeweils eine Entnahmeseite (11) und eine der Entnahmeseite (11) gegenüberliegende Einlagerungsseite (12) aufweisen, wobei die Regalfächer (10) dazu ausgebildet sind, die Lagermaterialeinheiten (2) jeweils in einer Fachebene (14) von der Entnahmeseite (11) ausgehend in Richtung der Einlagerungsseite (12) nacheinander angeordnet bereitzustellen,
wobei jedem Regalfach (10) jeweils eine Sensoranordnung (101) des Steuersystems (100) zugeordnet ist,
wobei die Sensoranordnungen (101) jeweils an der Einlagerungsseite (12) des zugeordneten Regalfachs (10) angeordnet sind,
wobei die Messbereiche (112) der Belegungssensoren (110) jeweils von der Einlagerungsseite (12) des zugeordneten Regalfachs (10) in Richtung der Entnahmeseite (11) des zugeordneten Regalfachs (10) ausgerichtet sind.

9. Verwendung von wenigstens zwei Distanzsensoren als Belegungssensoren (110) eines Steuersystem (100) für eine Lagermaterialeinheiten (2) in wenigstens zwei Regalfächern (10) bereitstellende Durchlaufregaleinheit (1),
wobei die Distanzsensoren jeweils einem der Regalfächer (10) zugeordnet und an einer Einlagerungsseite (12) des zugeordneten Regalfachs (10) derart angeordnet werden, dass Messbereiche (112) der Distanzsensoren von der Einlagerungsseite (12) des zugeordneten Regalfachs (10) in Richtung einer der Einlagerungsseite (12) gegenüberliegenden Entnahmeseite (11) des zugeordneten Regalfachs (10) ausgerichtet sind,
wobei mittels der Distanzsensoren jeweils ein Abstand (5) zu einer in das dem jeweiligen Distanzsensor zugeordnete Regalfach (10) eingelagerten, dem jeweiligen Distanzsensor nächstgelegenen hintersten Lagermaterialeinheit (3) gemessen wird,
wobei die Distanzsensoren über eine gemeinsame Datenleitung (102) einer Steuereinheit (130) des Steuersystems (100) verbunden werden,
wobei über die Datenleitung (102) die gemessenen Abstände (5) repräsentierende Abstandsdaten von den Distanzsensoren an die Steuereinheit (130) übertragen werden, um eine Anzahl von in den Regalfächern (10) angeordneten Lagermaterialeinheiten (2) in der Steuereinheit (130) zu erfassen,
wobei über die Datenleitung (102) Beladungssensordaten zu der Steuereinheit (130) übertragen werden, um ein Einlegen der Lagermaterialeinheiten (2) in die Regalfächer (10) zu steuern,
**dadurch gekennzeichnet, dass**
die durch die Distanzsensoren gebildeten Belegungssensoren (110) dazu ausgebildet sind, das Einlegen der Lagermaterialeinheiten (2) in an der Einlagerungsseite (12) angeordneten Einlegebereichen der Regalfächer (10) zu erfassen, sowie die
das Einlegen der Lagermaterialeinheiten (2) anzeigenden Beladungssensordaten (122) zu erzeugen und an die Steuereinheit (120) zu übermitteln.

## Claims

1. A control system (100) for a flow rack unit (1) for providing stock material units (2) in at least two rack bays (10),
wherein the control system (100) comprises at least two sensor arrangements (101) and a control unit (130);
wherein the sensor arrangements (101) are connected to the control unit (130) via a common data line (102);
wherein the sensor arrangements (101) each comprise an occupancy sensor (110) configured as a distance sensor;
wherein the occupancy sensors (110) are configured to be respectively associated with one of the rack bays (10) and to be arranged at a storage side (12) of the associated rack bay (10) such that a measurement zone (112) of the respective occupancy sensor (110) is aligned from the storage side (12) of the rack bay (10) in the direction of a removal side (11) of the rack bay (10) disposed opposite the storage side (12) to measure a distance (5) from a rearmost stock material unit (3) stored in the associated rack bay (10) and closest to the occupancy sensor (110);
wherein each occupancy sensor (110) is configured to transmit distance data representing the measured distance (5) via the data line (102) to the control unit (130) to detect a number of stock material units (2) stored in the rack bays (10) in the control unit (130),
**characterized in that**,
in each sensor arrangement (101), the occupancy sensor (110) is configured to detect a placement of a stock material unit (4) to be placed at the storage side (12) of the associated rack bay (10) and to transmit load sensor data (122) indicating the placement via the data line (102) to the control unit (130), or,
in each sensor arrangement (101), a load sensor (120) is additionally present which is configured to detect a placement of a stock material unit (4) to be placed at the storage side (12) of the associated rack bay (10) and to transmit load sensor data (122) indicating the placement via the data line (102) to the control unit (130), or, in some of the sensor arrangements (101), the occupancy sensor (110) is configured to detect a placement of a stock material unit (4) to be placed at the storage side (12) of the associated rack bay (10) and to transmit load sensor data (122) indicating the placement via the data line (102) to the control unit (130), and, in the remaining sensor arrangements (101), a load sensor (120) is additionally present which is configured to detect a placement of a stock material unit (4) to be placed at the storage side (12) of the associated rack bay (10) and to transmit load sensor data (122) indicating the placement via the data line (102) to the control unit (130).

2. A control system (100) in accordance with claim 1,
wherein the sensor arrangements (101) are connected in series via the data line (102).

3. A control system (100) in accordance with one of the preceding claims,
wherein the occupancy sensors (110) are configured to measure the distances (5) by means of the time of flight principle.

4. A control system (100) in accordance with any one of the preceding claims,
wherein the control system (100) comprises display units (160) which can be associated with the individual rack bays (10); and
wherein the control unit (130) is configured to transmit control data for the display units (160) via the data line (102) to mark one of the rack bays (10) as a destination rack bay for the stock material unit (4) to be placed.

5. A control system (100) in accordance with any one of the preceding claims,
wherein the control system (100) has an identification unit (140);
wherein the identification unit (140) is configured to detect a code (9) of the stock material unit (4) to be placed and to transmit it to the control unit (130); and
wherein the control unit (130) is configured to determine a destination rack bay for the stock material unit (4) to be placed with reference to the code (9).

6. A control system (100) in accordance with any one of the preceding claims,
wherein a first length of first stock material units (2) is stored in the control unit (130);
wherein a second length of second stock material units (2) is stored in the control unit (130); and
wherein the control unit (130) is configured to take account of the first length or of the second length in dependence on an identification signal supplied to the control unit (130) for identifying the stock material unit (4) to be placed in the determination of the distances (5).

7. A control system (100) in accordance with any one of the preceding claims,
wherein the control system (100) comprises a monitoring unit (170);
wherein the monitoring unit (170) is connected to sensor arrangements (102) via the data line (102);
wherein the monitoring unit (170) is connected to the control unit (130) via a further data line (103);
wherein the monitoring unit (170) comprises a master module (172) for controlling a data transmission over the data line (102); and
wherein the sensor arrangements (101) are connected to the data line (102) as slave units controlled by the master module (172).

8. A flow rack unit (1) for providing stock material units (2) comprising at least two rack bays (10) and a control system (100) in accordance with any one of the preceding claims,
wherein the rack bays (10) each have a removal side (11) and a storage side (12) disposed opposite the removal side (11);
wherein the rack bays (10) are configured to provide the stock material units (2) respectively in a rack level (14), starting from the removal side (11), arranged after one another in the direction of the storage side (12); wherein a respective sensor arrangement (101) of the control system (100) is associated with each rack bay (10);
wherein the sensor arrangements (101) are each arranged at the storage side (12) of the associated rack bay (10);
wherein the measurement zones (112) of the occupancy sensors (110) are each aligned from the storage side (12) of the associated rack bay (10) in the direction of the removal side (11) of the associated rack bay (10).

9. Use of at least two distance sensors as occupancy sensors (110) of a control system (100) for a flow rack unit (1) providing stock material units (2) in at least two rack bays (10),
wherein the distance sensors are each associated with one of the rack bays (10) and are arranged at a storage side (12) of the associated rack bay (10) such that measurement zones (112) of the distance sensors are aligned from the storage side (12) of the associated rack bay (10) in the direction of a removal side (11) of the associated rack bay (10) disposed opposite the storage side (12);
wherein a respective distance (5) from a rearmost stock material unit (3) stored in the rack bay (10) associated with the respective distance sensor and disposed closest to the respective distance sensor is measured by means of the distance sensors;
wherein the distance sensors (101) are connected via a common data line (102) of a control unit (130) of the control system (100);
wherein distance data representing the measured distances (5) are transmitted by the distance sensors via the data line (102) to the control unit (130) to detect a number of stock material units (2) arranged in the rack bays (10) in the control unit (130); and
wherein load sensor data are transmitted via the data line (102) to the control unit (130) to control a placement of the stock material units (2) in the rack bays (10),
**characterized in that**
the occupancy sensors (110) formed by the distance sensors are configured to detect the placement of the stock material units (2) in placement zones of the rack bays (10) arranged at the storage side (12) and to generate the load sensor data (122) indicating the placement of the stock material units (2) and to transmit them to the control unit (120).

## Revendications

1. Système de commande (100) destiné à une unité de rayonnage pour stockage dynamique (1) pour la mise à disposition d'unités de matériau de stockage (2) dans au moins deux casiers de rayonnage (10),
dans lequel
le système de commande (100) comprend au moins deux ensembles capteurs (101) et une unité de commande (130),
les ensembles capteurs (101) sont connectés à l'unité de commande (130) via une ligne de données commune (102),
les ensembles capteurs (101) comprennent chacun un capteur d'occupation (110) réalisé sous forme de capteur de distance,
les capteurs d'occupation (110) sont réalisés pour être associés chacun à l'un des casiers de rayonnage (10) et pour être agencés sur un côté d'insertion (12) du casier de rayonnage associé (10), de telle sorte qu'une zone de mesure (112) du capteur d'occupation respectif (110) est orientée depuis le côté d'insertion (12) du casier de rayonnage (10) en direction d'un côté de prélèvement (11) du casier de rayonnage (10) opposé au côté d'insertion (12), afin de mesurer une distance (5) par rapport à une unité de matériau de stockage (3) la plus arrière, insérée dans le casier de rayonnage associé (10), et la plus proche du capteur d'occupation (110),
chaque capteur d'occupation (110) est réalisé pour transmettre à l'unité de commande (130), via la ligne de données (102), des données de distance représentant la distance mesurée (5), afin de détecter dans l'unité de commande (130) un nombre d'unités de matériau de stockage (2) insérées dans les casiers de rayonnage (10),
**caractérisé en ce que**
dans chaque ensemble capteur (101), le capteur d'occupation (110) est réalisé pour détecter une insertion d'une unité de matériau de stockage à insérer (4) sur le côté d'insertion (12) du casier de rayonnage associé (10) et pour transmettre à l'unité de commande (130), via la ligne de données (102), des données de capteur de chargement (122) indiquant l'insertion, ou dans chaque ensemble capteur (101), il est prévu en supplément un capteur de chargement (120) qui est réalisé pour détecter une insertion d'une unité de matériau de stockage à insérer (4) sur le côté d'insertion (12) du casier de rayonnage associé (10) et pour transmettre à l'unité de commande (130), via la ligne de données (102), des données de capteur de chargement (122) indiquant l'insertion, ou dans une partie des ensembles capteurs (101), le capteur d'occupation (110) est réalisé pour détecter une insertion d'une unité de matériau de stockage à insérer (4) sur le côté d'insertion (12) du casier de rayonnage associé (10) et pour transmettre à l'unité de commande (130), via la ligne de données (102), des données de capteur de chargement (122) indiquant l'insertion, et dans l'autre partie des ensembles capteurs (101), il est prévu en supplément un capteur de chargement (120) qui est réalisé pour détecter une insertion d'une unité de matériau de stockage à insérer (4) sur le côté d'insertion (12) du casier de rayonnage associé (10) et pour transmettre à l'unité de commande (130), via la ligne de données (102), des données de capteur de chargement (122) indiquant l'insertion.

2. Système de commande (100) selon la revendication 1,
dans lequel les ensembles capteurs (101) sont connectés en série par la ligne de données (102).

3. Système de commande (100) selon l'une des revendications précédentes,
dans lequel les capteurs d'occupation (110) sont réalisés pour mesurer les distances (5) au moyen du principe de parcours de la lumière.

4. Système de commande (100) selon l'une des revendications précédentes, dans lequel le système de commande (100) comprend des unités d'affichage (160) associables aux casiers de rayonnage individuels (10),
l'unité de commande (130) est réalisée pour transmettre des données de commande pour les unités d'affichage (160) via la ligne de données (102) afin d'identifier l'un des casiers de rayonnage (10) comme un casier de rayonnage cible pour l'unité de matériau de stockage à insérer (4).

5. Système de commande (100) selon l'une des revendications précédentes, dans lequel le système de commande (100) comprend une unité d'identification (140),
l'unité d'identification (140) est réalisée pour détecter et transmettre à l'unité de commande (130) un identifiant (9) de l'unité de matériau de stockage à insérer (4),
l'unité de commande (130) est réalisée pour déterminer, à l'aide de l'identifiant (9), un casier de rayonnage cible pour l'unité de matériau de stockage à insérer (4).

6. Système de commande (100) selon l'une des revendications précédentes, dans lequel
une première longueur de premières unités de matériau de stockage (2) est mémorisée dans l'unité de commande (130),
une deuxième longueur de deuxièmes unités de matériau de stockage (2) est mémorisée dans l'unité de commande (130),
l'unité de commande (130) est réalisée pour tenir compte, lors de la détermination des distances (5), de la première longueur ou de la deuxième longueur en fonction d'un signal d'identification amené à l'unité de commande (130) pour identifier l'unité de matériau de stockage à insérer (4).

7. Système de commande (100) selon l'une des revendications précédentes, dans lequel le système de commande (100) comprend une unité de contrôle (170),
l'unité de contrôle (170) est connectée à des ensembles capteurs (102) via la ligne de données (102),
l'unité de contrôle (170) est connectée à l'unité de commande (130) par une autre ligne de données (103),
l'unité de contrôle (170) comprend un module maître (172) pour commander une transmission de données sur la ligne de données (102),
les ensembles capteurs (101) sont connectés à la ligne de données (102) en tant qu'unités esclaves pilotées par le module maître (172).

8. Unité de rayonnage pour stockage dynamique (1) destinée à la mise à disposition d'unités de matériau de stockage (2), comprenant au moins deux casiers de rayonnage (10) et un système de commande (100) selon l'une des revendications précédentes,
dans laquelle
les casiers de rayonnage (10) présentent chacun un côté de prélèvement (11) et un côté d'insertion (12) opposé au côté de prélèvement (11),
les casiers de rayonnage (10) sont réalisés pour mettre à disposition, dans un plan de casier (14), les unités de matériau de stockage (2) respectives, agencées les unes après les autres à partir du côté de prélèvement (11) en direction du côté d'insertion (12),
un ensemble capteur (101) du système de commande (100) est associé à chaque casier de rayonnage (10),
les ensembles capteurs (101) sont disposés chacun sur le côté d'insertion (12) du casier de rayonnage (10) associé,
les zones de mesure (112) des capteurs d'occupation (110) sont orientées chacune depuis le côté d'insertion (12) du casier de rayonnage associé (10) en direction du côté de prélèvement (11) du casier de rayonnage associé (10).

9. Utilisation d'au moins deux capteurs de distance comme capteurs d'occupation (110) d'un système de commande (100) destiné à unité de rayonnage pour stockage dynamique (1) mettant à disposition des unités de matériau de stockage (2) dans au moins deux casiers de rayonnage (10),
dans laquelle
les capteurs de distance sont associés chacun à l'un des casiers de rayonnage (10) et sont disposés sur un côté d'insertion (12) du casier de rayonnage associé (10), de telle sorte que des zones de mesure (112) des capteurs de distance sont orientées depuis le côté d'insertion (12) du casier de rayonnage associé (10) en direction d'un côté de prélèvement (11) du casier de rayonnage associé (10) opposé au côté d'insertion (12),
une distance respective (5) par rapport à une unité de matériau de stockage (3) la plus arrière, insérée dans le casier de rayonnage (10) associé au capteur de distance respectif, et la plus proche du capteur de distance respectif, est mesurée à l'aide des capteurs de distance,
les capteurs de distance sont connectés à une unité de commande (130) du système de commande (100) via une ligne de données (102) commune, des données de distance représentant les distances mesurées (5) sont transmises des capteurs de distance à l'unité de commande (130) via la ligne de données (102), afin de détecter dans l'unité de commande (130) un nombre d'unités de matériau de stockage (2) agencées dans les casiers de rayonnage (10),
des données de capteurs de chargement sont transmises à l'unité de commande (130) via la ligne de données (102), afin de commander une insertion des unités de matériau de stockage (2) dans les casiers de rayonnage (10),
**caractérisée en ce que**
les capteurs d'occupation (110) formés par les capteurs de distance sont réalisés pour détecter l'insertion des unités de matériau de stockage (2) dans des zones d'insertion des casiers de rayonnage (10) disposées sur le côté d'insertion (12), et pour générer et transmettre à l'unité de commande (120) des données de capteur de chargement (122) indiquant l'insertion des unités de matériau de stockage (2).
